Europäisches Patentamt

European Patent Office

Office européen des brevets

(19)

(11) Publication number: 0 361 414 A2

# EUROPEAN PATENT APPLICATION

(21) Application number: 89117803.0

(22) Date of filing: 27.09.89

(51) Int. Cl.⁵: C08L 101/00 , G11B 23/02 , //(C08L101/00,83:04,25:06)

(30) Priority: 29.09.88 JP 244900/88

(43) Date of publication of application:
04.04.90 Bulletin 90/14

(84) Designated Contracting States:
DE GB

(71) Applicant: HITACHI MAXELL, LTD.
1-88, Ushitora 1-chome
Ibaraki-shi Osaka-fu(JP)

(72) Inventor: Hirata, Hiroyuki
3-5-2-102, Yamasaki Shimamoto-cho
Mishima-gun Osaka-fu(JP)
Inventor: Araki, Tatsuo
3-5-2-203, Yamasaki Shimamoto-cho
Mishima-gun Osaka-fu(JP)

(74) Representative: von Kreisler, Alek,
Dipl.-Chem. et al
Patentanwälte Von Kreisler-Selting-Werner
Deichmannhaus am Hauptbahnhof
D-5000 Köln 1(DE)

(54) Resin composition and article made of resin composition.

(57) A resin composition comprising a thermoplastic resin and a lubricating oil wherein a ratio of a melt flow index of the lubricating oil to that of the thermoplastic resin when measured under the same conditions is from 1:2 to 10:1, from which a molded article having good lubricity can be produced.

EP 0 361 414 A2

## RESIN COMPOSITION AND ARTICLE MADE OF RESIN COMPOSITION

### BACKGROUND OF THE INVENTION

#### Field of the Invention

The present invention relates to a resin composition and an article made of said resin composition. More particularly, the present invention relates to a resin composition comprising a thermoplastic resin and a lubricating oil and an article such as a reel for a magnetic recording tape which is made of said resin composition.

#### Description of the Related Art

Recently, a synthetic resin is used to produce sliding parts of various equipments including a magnetic recording tape cassette to reduce the number of parts, material costs and weight. When the synthetic resin as such does not have sufficient sliding performance, a lubricating oil having a low viscosity which is at most one tenth of the melt viscosity of the synthetic resin measured under the same condition is added to the synthetic resin in an amount of 0.5 to 10 % by weight.

Since the lubricating oil having the comparatively low viscosity has poor compatibility with the synthetic resin and freely moves in the resin matrix, an article made of the resin composition containing such the lubricating oil suffers from bleeding out of the lubricating oil so that, after continuous use at high temperature and high humidity, the lubricating oil exudes onto the surface of the article and deteriorates the value of the article. Therefore, such the lubricating oil cannot be added to the synthetic resin in a large amount.

Further, in the conventional resin composition comprising the synthetic resin and the lubricating oil, the difference of the viscosity between the resin and the rubricating oil is very large. Then, in case of injection molding, when the composition is melt and metered with a screw of an in-line screw type plasticator, the lubricating oil exudes from the composition and flows over the surface of the composition mass. As the result, the screw slips and races due to the lubricating oil, so that the screw cannot apply sufficient chopping effects on the composition, which results in insufficient dispersion of the lubricating oil in the resin matrix, delay of metering time, variation of metering, appearance of silver streaks on the surface of the molded article due to inclusion of air or burning of the resin due to sudden increase of a filling rate. Thereby, the quality of the article is damaged and the productivity is decreased.

### SUMMARY OF THE INVENTION

One object of the present invention is to provide a resin composition comprising a thermoplastic resin and a lubricating oil having a comparatively high viscosity which is close to that of the resin in the melt state.

Another object of the present invention is to provide a molded article with good lubricity made of a resin composition comprising a thermoplastic resin and a lubricating oil.

These and other objects are accomplished by a resin composition comprising a thermoplastic resin and a lubricating oil wherein a ratio of a melt flow index of the lubricating oil to that of the thermoplastic resin when measured under the same conditions is from 1:2 to 10:1 and an article made of said resin composition.

### DETAILED DESCRIPTION OF THE INVENTION

In the resin composition of the present invention, the thermoplastic resin and the lubricating oil has rather close melt flow index when measured under the same condition according to JIS K 7210, that is, the ratio of the melt flow index of the lubricating oil to that of the thermoplastic resin is from 1:2 to 10:1, particularly from 2:1 to 5:1.

Since the lubricating oil has the melt flow index close to that of the thermoplastic resin and there is no material difference between the viscosity during melting and kneading the composition, in case of injection molding of the resin composition, the lubricating oil does not exude from the composition during melting and metering with the screw of the in-line screw type plasticator. Therefore, the screw does not slip or race, and the resin composition is well chopped and kneaded, whereby the lubricating oil can be dispersed throughout the resin matrix in a larger amount. This leads to the improvement of sliding properties of the molded article without deteriorating the quality of the molded article and productivity.

Since such the lubricating oil is rather viscous, it is homogeneously dispersed in the resin matrix and trapped among the resin molecules, so that the lubricating oil does not bleed out from the molded article. Therefore, after continuous use of the article under conditions of high temperature high and high humidity, no or little lubricating oil exudes onto the article surface and the quality of the article is not damaged.

The amount of the lubricating oil is preferably from 0.5 to 70 % by weight, preferably from 20 to 70 % by weight based on the total weight of the resin composition. When the amount of the lubricating oil is smaller than the above lower limit, the effects of the present invention are not satisfactorily achieved. When the amount of the lubricating oil is too large, the inherent properties of the thermoplastic resin are deteriorated, and the molded article becomes very brittle and has insufficient strength for practical use. When the resin composition containing 20 % by weight or more of the lubricating oil can be used as a master batch.

Preferred examples of the lubricating oil to be used according to the present invention are silicone oils such as dimethylsilicone oil, methylphenylsilicone oil, amino-modified silicone oil, epoxy-modified silicone oil, alcohol-modified silicone oil and the like. Among them, dimethylsilicone oil is more preferable since it has good heat resistance and better lubricity and is cheap.

As the thermoplastic resin, any of the conventional thermoplastic resins can be used in the present invention. Specific examples of the thermoplastic resin are polystyrene resin, ABS resin, AS resin, vinyl chloride resin, ·polyethylene resin, polypropylene resin, polyacetal resin, polyphenylene oxide rein, polyamide resin, polycarbonate resin, polybutylene terephthalate resin, polyethylene terephthalate resin, polymethylpentene resin, polyphenylenesulfide resin, polyarylate resin, polyamideimide resin, polyetheresterketone resin and the like. Among them, the polystyrene resin and the ABS resin are preferred because of their good wear resistance.

The resin composition of the present invention may be prepared by a per se conventional method. For example, with the use of a mixing roll mill, a press kneader, a Banbury mixer or the like, the thermoplastic resin and the lubricating oil are mixed at a temperature higher than the Vicat softening point of the thermoplastic resin and lower than the melting point, and the mixture is ground with a suitable grinder and pelletized with an extruder. Alternatively, the thermoplastic resin and the lubricating oil are directly supplied to the extruder and pelletized. In case of direct pelletizing, to throughly mixed the thermoplastic resin and the lubricating oil, a twin-screw extruder is preferred.

The resin composition of the present invention is molded by a conventional molding method such as injection molding, compression molding, extrusion molding and the like, and the molded article has good lubricity. In some cases, the resin composition of the present invention can be used as a master batch and diluted with the resin so that the concentration of the lubricating oil is adjusted to a desired value, whereby the molded article having suitable lubricity can be obtained. The master batch can be diluted by mixing the master batch with the resin and supplying the diluted resin composition to the molding apparatus.

## PREFERRED EXAMPLES OF THE INVENTION

The present invention will be explained by the following Examples.

### Examples 1-10 and Comparative Examples 1-4

The thermoplastic resin and the lubricating oil as shown in Table 1 were kneaded with a mixing roll mill at 190°C for 20 minutes. After taking the mixture out of the mill, it was ground and pelletized. The pelletized composition was used as a master batch.

Then, the master batch was diluted with the green resin to reduce the concentration of lubricating oil to 3 % by weight and dry blended with a tumbling mixer. Then, the composition was molded with an injection molding machine to produce a sample plate and a tape reel.

Examples 11 and 12 and Comparative Example 5

The thermoplastic resin and the lubricating oil as shown in Table 1 were kneaded with the mixing roll mill at 170°C for 20 minutes. Thereafter, the composition was treated and molded in the same manners as in Example 1 to produce a sample plate and a tape reel.

Example 13

The thermoplastic resin and the lubricating oil as shown in Table 1 were kneaded with the mixing roll mill at 210°C for 20 minutes. Thereafter, the composition was treated and molded in the same manners as in Example 1 to produce a sample plate and a tape reel.

Examples 14-17 and Comparative Example 6

The thermoplastic resin and the lubricating oil as shown in Table 1 were mixed with a Henschel mixer for 20 minutes, and then pelletized with a twin-screw extruder. The pellets were directly molded with the injection molding machine to produce a sample plate and a tape reel.

Comparative Example 7

The polystyrene resin pellets produced in Example 1 were directly molded with the injection molding machine to produce a sample plate and a tape reel.

Table 1

| Example No. | Thermoplastic resin | Lubricating oil | Ratio of melt flow index |
|---|---|---|---|
| | (wt %) | (wt %) | (oil/resin) |
| 1 | Polystyrene (50) | Dimethylsilicone oil (50) | 1:1 |
| 2 | ↑ (80) | ↑ (20) | 1:1 |
| 3 | ↑ (30) | ↑ (70) | 1:1 |
| 4 | ↑ (50) | ↑ (50) | 10:1 |
| 5 | ↑ (50) | ↑ (50) | 2:1 |
| 6 | ↑ (50) | Methylphenylsilicone oil (50) | 1:1 |
| 7 | ↑ (50) | Amino-modified silicone oil (50) | 1:1 |
| 8 | ↑ (50) | Alcohol-modified silicone oil (50) | 1:1 |
| 9 | ABS resin (50) | Dimethylsilicone oil (50) | 1:1 |
| 10 | ↑ (60) | Methylphenylsilicone oil (40) | 10:1 |
| 11 | Polypropylene (80) | Dimethylsilicone oil (20) | 2:1 |
| 12 | Polyacetal (30) | Methylphenylsilicone oil (70) | 5:1 |
| 13 | Nylon 6 (60) | Dimethylsilicone oil (40) | 1:1 |
| 14 | Polystyrene (99.5) | ↑ (0.5) | 1:1 |
| 15 | ↑ (97) | ↑ (3) | 1:1 |
| 16 | ↑ (90) | ↑ (10) | 1:1 |
| 17 | ABS resin (95) | Methylphenylsilicone oil (5) | 10:1 |
| Com.1 | Polystyrene (25) | Dimethylsilicone oil (75) | 1:1 |
| Com.2 | ↑ (50) | ↑ (50) | 1:3 |
| Com.3 | ↑ (50) | ↑ (50) | 20:1 |
| Com.4 | ABS resin (60) | ↑ (40) | 100:1 |
| Com.5 | Polypropylene (80) | Amino-modified silicone oil (20) | 50:1 |
| Com.6 | Polystyrene (99.6) | Dimethylsilicone oil (0.4) | 1:1 |
| Com.7 | ↑ (100) | (None) | ---- |

In Examples and Comparative Examples, the possibility of granulation through pelletizing was evaluated.

With each of the sample plates produced in Examples and Comparative Examples, were evaluated tensile strength, elongation, standard deviation of the tensile strength, a coefficient of static friction, specific abrasion wear, plasticizing time when molded, burning of resin and exuding of the lubricating oil.

The possibility of granulation is evaluated according to the following criteria:
Yes: No breakage or cracking of pellets occurs, and the pellets are not adhered to each other. Further, the pellets have sufficient strength as the commercial product.
No: The above requirements are not satisfied.

The tensile strength and elongation are evaluated by measuring tensile yield strength and elongation at break according to JIS K 7113.

The coefficient of static friction and specific abrasion wear are measured by placing a weight of 50 g on the sample plate and reciprocally sliding the weight on the plate at a rate of 40 mm/sec. with a stroke of 20 mm. After 500 times strokes, the coefficient of static friction and specific abrasion wear are measured.

The plasticizing time is measured with the use of Promat 40/20W (manufactured by Sumitomo Heavy Machinery Industry Co., Ltd.) and the time for metering the resin amount between the screw positions of 6 mm and 40 mm at the screw revolution rate of 150 rpm and under the back pressure of 5 kg/cm is recorded as the plasticizing time.

The burning of resin is evaluated by visually observing the appearance of black streaks due to burning according to the following criteria:
O: No streak.
X: Streaks.

The exuding of the lubricating oil is evaluated according to the following criteria after keeping a pair of the sample plates with laminating them together at 80° C for 8 hours:
O: The plates are not adhered since the amount of the exuded lubricating oil is satisfactorily small.

X: The plates are adhered due to excess exuding of the lubricating oil.

Table 2

| Example No. | Granulation | Tensile Strength | Elongation | Standard deviation of tensile strength | Coefficient of static friction | Specific abrasion wear | Plasticizing time | Resin burning | Exuding of oil |
|---|---|---|---|---|---|---|---|---|---|
| | | $(kg/cm^2)$ | (%) | | | $(mm^3/km.kg)$ | (sec.) | | |
| 1 | Yes | 320 | 20 | 1.46 | 0.06 | 0.019 | 7.2 | O | O |
| 2 | Yes | 322 | 22 | 1.23 | 0.06 | 0.018 | 7.1 | O | O |
| 3 | Yes | 318 | 19 | 1.76 | 0.06 | 0.019 | 6.9 | O | O |
| 4 | Yes | 320 | 20 | 1.48 | 0.06 | 0.020 | 7.2 | O | O |
| 5 | Yes | 321 | 20 | 1.42 | 0.06 | 0.020 | 7.0 | O | O |
| 6 | Yes | 322 | 21 | 1.35 | 0.08 | 0.025 | 7.3 | O | O |
| 7 | Yes | 319 | 19 | 1.52 | 0.09 | 0.032 | 7.3 | O | O |
| 8 | Yes | 318 | 18 | 1.46 | 0.09 | 0.033 | 7.1 | O | O |
| 9 | Yes | 450 | 8 | 1.34 | 0.06 | 0.014 | 6.9 | O | O |
| 10 | Yes | 453 | 7 | 1.52 | 0.08 | 0.017 | 6.9 | O | O |
| 11 | Yes | 282 | 120 | 1.25 | 0.15 | 0.009 | 5.2 | O | O |
| 12 | Yes | 660 | 15 | 1.82 | 0.09 | 0.002 | 8.5 | O | O |
| 13 | Yes | 620 | 80 | 1.76 | 0.13 | 0.007 | 7.6 | O | O |
| 14 | Yes | 340 | 40 | 1.56 | 0.25 | 0.048 | 7.2 | O | O |
| 15 | Yes | 320 | 22 | 1.62 | 0.07 | 0.020 | 7.4 | O | O |
| 16 | Yes | 182 | 6 | 1.44 | 0.04 | 0.011 | 10.2 | O | O |
| 17 | Yes | 282 | 25 | 1.42 | 0.08 | 0.012 | 7.1 | O | O |
| Com.1 | No | --- | --- | --- | --- | --- | --- | - | - |
| Com.2 | No | --- | --- | --- | --- | --- | --- | - | - |
| Com.3 | Yes | 290 | 7 | 3.02 | 0.09 | 0.031 | 14.4 | X | X |
| Com.4 | Yes | 410 | 3 | 3.09 | 0.09 | 0.020 | 18.7 | X | X |
| Com.5 | Yes | 265 | 60 | 3.52 | 0.15 | 0.010 | 17.8 | X | X |
| Com.6 | Yes | 345 | 42 | 1.43 | 0.28 | 0.066 | 8.2 | O | O |
| Com.7 | --- | 355 | 35 | 1.42 | 0.45 | 0.092 | 8.3 | O | O |

## Claims

1. A resin composition comprising a thermoplastic resin and a lubricating oil wherein a ratio of a melt flow index of the lubricating oil to that of the thermoplastic resin when measured under the same conditions is from 1:2 to 10:1.

2. The resin composition according to claim 1, wherein an amount of the lubricating oil is from 0.5 to 70 % by weight based on the weight of the total weight of the resin composition.

3. The resin composition according to claim 1, wherein the amount of the lubricating oil is from 20 to 70 % by weight based on the weight of the total weight of the resin composition.

4. The resin composition according to claim 1, wherein the thermoplastic resin is polystyrene.

5. The resin composition according to claim 1, wherein the lubricating oil is silicone oil.

6. A molded article made of a resin composition comprising a thermoplastic resin and a lubricating oil wherein a ratio of a melt flow index of the lubricating oil to that of the thermoplastic resin when measured under the same conditions is from 1:2 to 10:1.

7. The molded article according to claim 6, wherein an amount of the lubricating oil is from 0.5 to 70 % by weight based on the weight of the total weight of the resin composition.

8. The molded article according to claim 6, wherein the amount of the lubricating oil is from 20 to 70 % by weight based on the weight of the total weight of the resin composition.

9. The molded article according to claim 6, wherein the thermoplastic resin is polystyrene.

10. The molded article according to claim 6, wherein the lubricating oil is silicone oil.

11. The molded article according to claim 6, which is a reel for a tape.

12. The molded article according to claim 6, which is a reel for a magnetic recording tape.